# EUROPÄISCHE PATENTSCHRIFT

(11) **EP 1 430 479 B1**
(45) Veröffentlichungstag und Bekanntmachung des Hinweises auf die Patenterteilung: **27.09.2006**
(21) Anmeldenummer: 02732691.7
(22) Anmeldetag: 02.05.2002
(51) Int. Cl.: G11B 7/26, B29C 65/48

(54) **VORRICHTUNG ZUM VERKLEBEN VON SUBSTRATEN**
DEVICE FOR BONDING SUBSTRATES
DISPOSITIF POUR ASSEMBLER DES SUBSTRATS

(30) Priorität: 10.05.2001 DE 10122667
(43) Veröffentlichungstag der Anmeldung: 23.06.2004
(73) Patentinhaber: Steag HamaTech AG, 75447 Sternenfels (DE)
(72) Erfinder: LEONHARDT, Stephan, 75015 Bretten (DE); GÜCLÜ, Ilhan, 75015 Bretten (DE); WINTER, Marc, 75417 Mühlacker (DE)
(74) Vertreter: Wagner & Geyer
(86) Internationale Anmeldenummer: PCT/EP2002/004792
(87) Internationale Veröffentlichungsnummer: WO 2002/091373

(56) Entgegenhaltungen:
- WO-A-99/07542
- WO-A-99/27028
- US-B1- 6 221 454
- PATENT ABSTRACTS OF JAPAN vol. 017, no. 299 (P-1552), 8. Juni 1993 (1993-06-08) & JP 05 020714 A (MATSUSHITA ELECTRIC IND CO LTD), 29. Januar 1993 (1993-01-29)

## Beschreibung

Die vorliegende Erfindung bezieht sich auf eine Vorrichtung und ein Verfahren zum Verkleben von zwei ein Innenloch aufweisenden Substraten zu einer Substratscheibe, mit einer ersten Haltevorrichtung zum Halten des ersten Substrats, einem Drehfest mit der ersten Haltevorrichtung verbundenen Zentrierstift, der in das Innenloch wenigstens des ersten Substrates einführbar ist, und einem Antrieb zum Drehen des Zentrierstiftes und der ersten Halteinrichtung.

Eine derartige Vorrichtung für das Zusammenfügen von Scheiben zu einer CD oder DVD ist beispielsweise aus der US-A-4,877,475 bekannt. Während einer Drehung der Substratscheiben, bei der ein Klebematerial gleichmäßig zwischen ihnen verteilt wird, müssen sie synchron gedreht werden, um ein ordnungsgemäßes Zusammenfügen zu gewährleisten. Dies wird bei dem bekannten Verfahren über eine kraftflüssige Verbindung zwischen den Substraten erreicht. Während das untere Substrat auf einer drehbaren Auflage aufliegt und mit dieser gedreht wird, wird das obere Substrat so stark gegen das untere Substrat gedrückt, daß es mit dem unteren Substrat mitgedreht wird.

Durch dieses Zusammendrücken der Substrate ergibt sich jedoch das Problem, daß die Substrate schon vor einer gleichmäßigen Verteilung eines Klebers dazwischen in Kontakt gebracht werden müssen, was die Verteilung des Klebers beeinträchtigen kann. Darüber hinaus müssen alle mechanischen Komponenten der Vorrichtung so fest ausgeführt werden, daß sie den mechanischen Belastungen beim Zusammendrücken widerstehen, was zu hohen Kosten der Vorrichtung führt.

Ferner sei auf die JP-A-05020714 verwiesen, die eine Vorrichtung und ein Verfahren zum Verkleben von zwei ein Innenloch aufweisenden Substraten zu einer Substratscheibe, zeigt. Bei der hieraus bekannten Vorrichtung ist eine ersten Haltevorrichtung zum Halten eines ersten Substrats, ein drehfest mit der ersten Haltevorrichtung verbundener Zentrierstift, der in das Innenloch wenigstens des ersten Substrats einführbar ist, und einem Antrieb zum Drehen des Zentrierstifts und der ersten Haltevorrichtung vorgesehen. Die Vorrichtung besitzt auch, ein mit dem Zentrierstift in Eingriff bringbaren Mitnehmer und eine zweite Haltevorrichtung zum Halten eines zweiten Substrats, die drehfest mit dem Mitnehmer verbunden ist. Zum Verkleben zweier Substrate werden die Substrate jeweils an der ersten bzw. zweiten Haltevorrichtung angebracht und der Zentrierstift wird mit dem Mitnehmer in Eingriff gebracht, wobei die Substrate beabstandet zueinander gehalten werden. Nun werden die erste und zweite Halteeinrichtung langsam gedreht, um einen Ring aus Klebermaterial zwischen den Substraten auszubilden. Anschließend wird das zweite Substrat von der zweiten Halteeinrichtung gelöst, sodass es frei auf dem ersten Substrat bzw. dem Klebermaterial aufliegt, und der Zentrierstift und der Mitnehmer werden auseinander bewegt. Zum Verteilen des Klebers zwischen den Substraten werden sie nun rasch über die erste Halteeinrichtung gedreht, wobei das zweite Substrat nur durch den Kontakt über das Klebermaterial mit dem ersten Substrat mitgedreht wird. Hierbei kann es zu einer Relativbewegung zwischen den Substraten kommen was zu Lufteinschlüssen dazwischen führen kann.

Ausgehend von den bekannten Vorrichtungen liegt der vorliegenden Erfindung die Aufgabe zugrunde, eine Vorrichtung und ein Verfahren zum Verkleben von Substraten zu schaffen, die bzw. das auf einfache und kostengünstige Weise eine gleichzeitige Drehung beider Substrate während des Verklebevorgangs gewährleistet.

Erfindungsgemäß wird diese Aufgabe durch eine Vorrichtung gemäß Anspruch 1 oder ein Verfahren gemäß Anspruch 16 gelöst (Anspruch 1 ist gegenüber der JP-A-0502714 abgegrenzt). Bevorzugte Ausgestaltungen der Erfindung ergeben sich aus den untergeordneten Ansprüchen.

Vorzugsweise weisen der Zentrierstift und der Mitnehmer den selben Umfang auf, wodurch eine durchgängige Zentrierfläche für die beiden Substrate gebildet wird. Dabei ist der Mitnehmer vorzugsweise als Zentrierstift für das Innenloch des zweiten Substrates vorgesehen.

Um die Substrate während der Drehung sicher zu haltert, weist wenigstens eine der Haltevorrichtungen wenigstens einen Vakuumsauger auf. Für einen guten und gleichmäßigen Halt der Substrate weist der Vakuumsauger vorzugsweise einen Ring mit einer Vielzahl von Saugöffnungen auf.

Gemäß einer besonders bevorzugten Ausführungsform der Erfindung fällt eine Drehachse des Zentrierstifts mit der Drehachse des Mitnehmers zusammen, um eine genaue Zentrierung der Substrate zu erhalten. Vorzugsweise ist die zweite Haltevorrichtung entlang der Drehachse des Mitnehmers bewegbar und somit immer zu lhm zentriert. Bei einer Ausführungsform ist zweite Haltevorrichtung mit dem Mitnehmer entlang seiner Drehachse bewegbar ist. Bei einer alternativen oder auch zusätzlichen Ausführungsform der Erfindung ist die zweite Haltevorrichtung relativ zum Mitnehmer entlang seiner Drehachse bewegbar. Dabei ist die Bewegung der zweiten Haltevorrichtung vorzugsweise durch eine mit dem Mitnehmer verbundene Welle geführt.

Die Erfindung wird nachfolgend anhand bevorzugter Ausführungsbeispiel unter Bezugnahme auf die Zeichnungen erläutert; in den Zeichnungen zeigt;
- Figur 1: eine perspektivische Ansicht eines Zentrierstifts gemäß der vorliegenden Erfindung;
- Figur 2: eine Seitenansicht auf einen Zentrierstift und einen Mitnehmer gemäß der vorliegenden Erfindung; und
- Figur 3: eine schematische Schnittansicht durch eine Vorrichtung zum Verkleben von Substraten gemäß der vorliegenden Erfindung;
- Figur 4: eine schematische Schnittansicht durch einen oberen Teil der Vorrichtung gemäß Fig. 3.

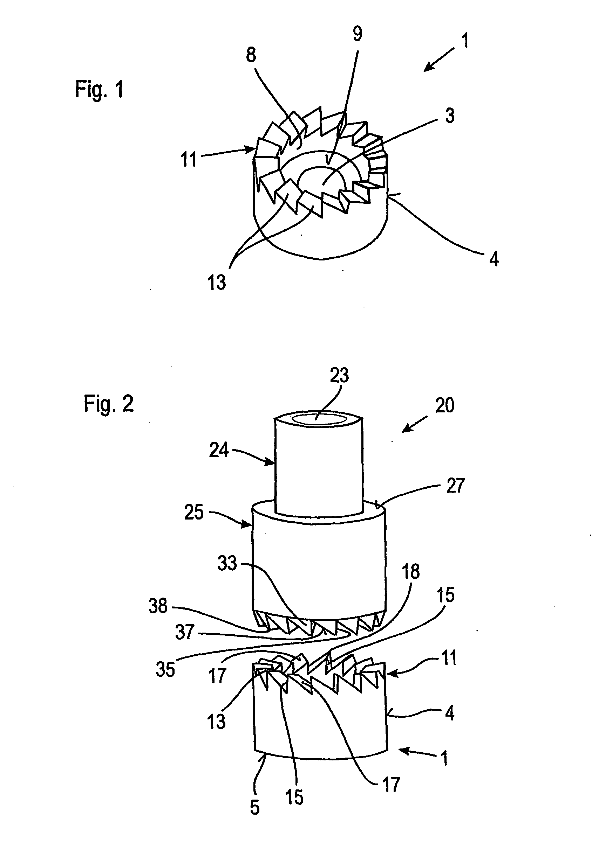

Figur 1 zeigt eine perspektivische Ansicht eines Zentrierstifts 1 der vorliegenden Erfindung. Der Zentrierstift 1 weist eine kreiszylindrische Form mit einer Mittelöffnung 3 und einer Umfangsfläche 4 auf, die zur Führung und Zentrierung von ein Innenloch aufweisenden Substraten dient.

Der Zentrierstift 1 weist eine ebene Unterseite 5 auf. In einem nach oben weisenden Abschnitt des Zentrierstifts 1 ist eine kreisrunde Ausnehmung 8 mit einem Durchmesser, der größer ist als der Durchmesser der Mittelöffnung 3 vorgesehen. Durch diese Ausnehmung 8 wird eine nach oben weisende Schulter 9 gebildet, die sich zwischen der Mittelöffnung 3 und einem Wandteil 11 des Zentrierstifts 1 erstreckt. Der Wandteil 11 besitzt an seiner Stirnseite, d. h. in Axialrichtung des zylindrischen Zentrierstifts 1 nach oben weisend, eine Zahnkontur mit einer Vielzahl von Zähnen 13 auf. Wie am besten in Fig. 2 zu erkennen ist, weisen die Zähne 13 jeweils eine sich im wesentlichen parallel zur Axialrichtung des Zentrierstifts verlaufende Zahnflanke 15 sowie eine hierzu geneigte Zahnflanke 17 auf, die sich jeweils an einem Scheitelpunkt 18 treffen.

In Figur 2 ist neben dem Zentrierstift 1 auch ein darüber angeordneter Mitnehmer 20 gezeigt. Der Mitnehmer 20 besitzt eine kreiszylindrische Form mit einer Mittelöffnung 23. Der Mitnehmer 20 weist einen oberen Abschnitt 24 sowie einen unteren Abschnitt 25 auf. Der obere Abschnitt 24 besitzt eine kleinere Umfangsabmessung wie der untere Abschnitt 25, so daß dazwischen eine Schulter 27 gebildet wird. Die Umfangsabmessung des unteren Abschnitts 25 entsprechen der Umfangsabmessung des Zentrierstifts 1. Am nach unten weisenden Ende des unteren Abschnitts 25 ist eine in Axialrichtung des Mitnehmers 20 weisende Zahnreihe mit einer Vielzahl von Zähnen 33 vorgesehen. Die Zähne 33 sind komplementär zu den Zähnen 13 am Zentrierstift 1 und sie weisen ebenfalls jeweils eine parallel zur Axialrichtung des Mitnehmers verlaufende Zahnflanke 35 sowie eine hierzu geneigte Zahnflanke 37 auf, die sich an einem Scheitelpunkt 38 der Zähne 33 treffen.

Wenn der Zentrierstift 1 und der Mitnehmer 20 axial aufeinander zubewegt werden, gleiten die geneigten Zahnflanken 17 und 37 der komplementären Zähne 13 bzw. 33 aneinander entlang, um eine Drehausrichtung zwischen dem Zentrierstift 1 und dem Mitnehmer 20 zu erreichen. Ferner wird durch die Form der Zähne 13 bzw. 33 eine Zentrierung des Zentrierstifts 1 zu dem Mitnehmer 20 erreicht. Im axial zusammenbewegten Zustand bilden der Zentrierstift 1 und der Mitnehmer 20 eine im wesentlichen gleichmäßige Umfangsfläche.

Wie zuvor erwähnt, kann der Zentrierstift 1 mit einer Drehwelle einer Dreheinrichtung verbunden werden, wodurch er aktiv um seine Längsmittelachse gedreht werden kann. Die parallel zur Axialrichtung des Zentrierstifts verlaufenden Zahnflanken weisen dabei in Drehrichtung, so daß sie bei einer Drehung des Zentrierstifts 1 mit den parallel zur Axialrichtung des Mitnehmers 20 verlaufenden Zahnflanken 35 formschlüssig in Eingriff kommen und somit eine gut Kraftübertragung zwischen dem Zentrierstift 1 und dem Mitnehmer 20 ermöglichen. Natürlich kann alternativ auch der Mitnehmer 20 mit einer angetriebenen Drehwelle verbunden sein, wobei dann die parallel zur Axialrichtung des Zentrierstifts verlaufenden Zahnflanken in Drehrichtung weisen.

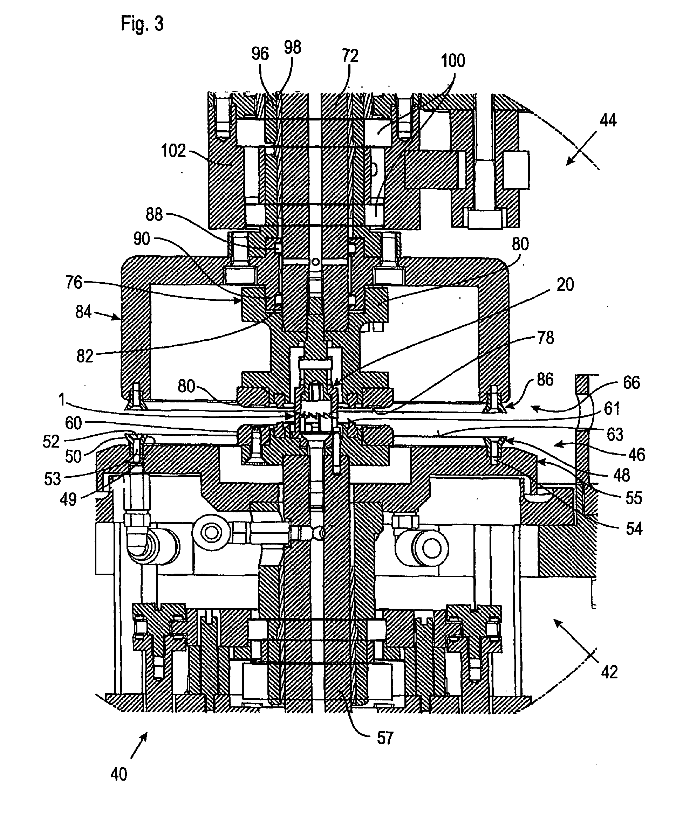

Figur 3 zeigt nunmehr eine schematische Schnittansicht einer Vorrichtung 40 zum Verkleben von zwei ein Innenloch aufweisenden Substraten, die zur Vereinfachung der Darstellung in Fig. 3 weggelassen wurden. Die Vorrichtung 40 weist ein Unterteil 42 sowie ein Oberteil 44 auf, die in Fig. 3 jeweils nur teilweise dargestellt sind. Das Unterteil 42 besitzt eine Zentrier- und Halteeinrichtung 46, die den Zentrierstift 1 aufweist. Die Zentrier- und Halteeinrichtung 46 weist ferner einen Vakuumgreifer in der Form eines Vakuumrings 48 auf. Der Vakuumring 48 besitzt eine kreisförmige, innenliegende Dichtlippe 49 sowie eine kreisförmige, außenliegende Dichtlippe 50, die dazwischen einen ringförmigen Raum 52 bilden. Der Raum 52 steht über einer Vielzahl von Vakuumöffnungen 53 mit einem Ringraum 54 in einem Träger 55 in Verbindung. Der Ringraum 54 steht über eine geeignete Zuleitung mit einer Unterdruckquelle, wie z.B. einer Pumpe, in Verbindung. Der Träger 55, der den Vakuumring 48 trägt, ist fest mit einer Drehwelle 57 des Unterteils 42 verbunden und mit dieser drehbar. Die Drehwelle 57 ist über eine geeignete Drehvorrichtung, wie beispielsweise einen Elektromotor, um ihre Längsachse drehbar. Der Saugring 48 ist konzentrisch zur Drehachse der Welle 57. Obwohl der Träger 55 drehfest mit der Welle 57 verbunden ist, ist die Welle 57 in Axialrichtung zum Träger 55 verschiebbar oder der Träger 55 zur Welle 57.

An ihrem oberen Ende trägt die Drehwelle 57 einen drehfest mit der Welle und axial mit der Welle verschiebbaren Aufsatz 60, an dem auch der Zentrierstift 1 befestigt ist. Der Zentrierstift 1 und der Aufsatz 60 sind somit mit der Drehwelle 57 drehbar und mit ihr in Axialrichtung verschiebbar. Der Aufsatz 60 weist eine gestufte Oberseite 61 auf, die über eine durch den Saugring 48 gebildete Ebene 63 hinaus nach oben bewegbar ist.

Die Funktion dieser Bewegung wird nachfolgend bei einer Funktionsbeschreibung der Vorrichtung 40 noch näher erläutert.

Das Oberteil 44 weist eine Halte- und Zentriereinrichtung 66 auf, die den Mitnehmer 20 beinhaltet. Die Zentrier- und Halteeinrichtung 66 ist oberhalb der Zentrier- und Halteeinrrichtung 46 angeordnet und ausschließlich in Axialrichtung zu dieser bewegbar, so daß die beiden Vorrichtungen zum Be- und Entladen von Substraten nur aufeinander zu und voneinander weg bewegt werden müssen. Das Oberteil 44 ist in größerer Einzelheit in der auf die selbe Anmelderin zurückgehenden und am selben Tag wie die vorliegende Anmeldung eingereichte Anmeldung "Vorrichtung zum Verkleben von Substraten" beschrieben, die zum Gegenstand der vorliegenden Anmeldung gemacht wird, um Wiederholungen zu vermeiden.

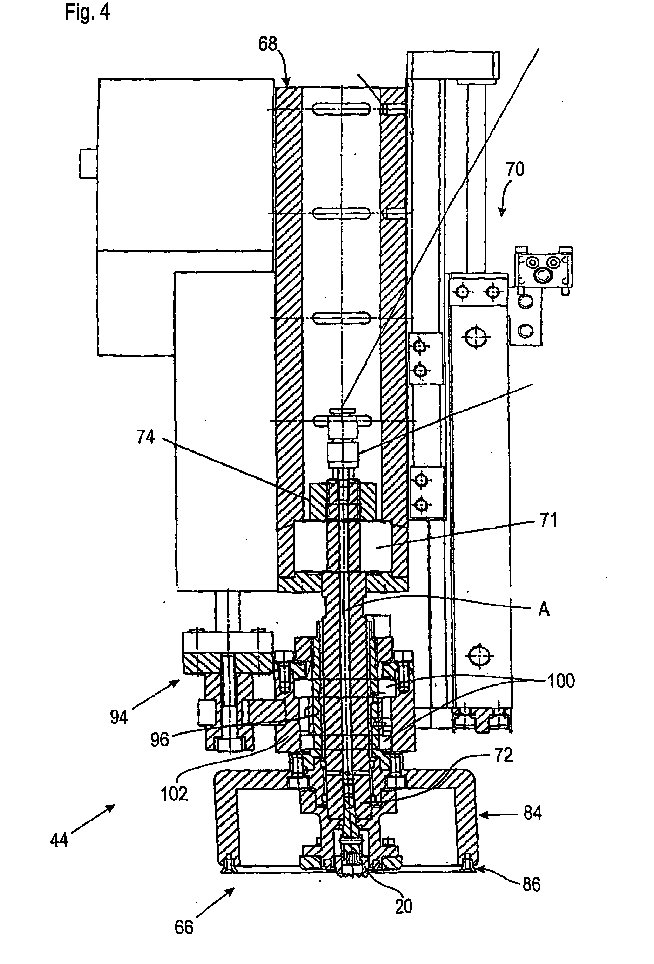

Das Oberteil 44 weist, wie am Besten in Fig. 4 zu erkennen ist, einen Träger 68 auf, der über einen geeigneten Schlittenmechanismus 70 in Axialrichtung verfahrbar ist. Ein Lager 71 in dem Träger 68 nimmt frei drehbar eine Welle 72 auf. Die Welle 72 ist über ein entsprechendes Befestigungselement, wie beispielsweise eine Mutter 74 in dem Träger 68 derart fixiert, dass sich die Welle 72 zwar frei um ihre Drehachse A drehen kann, aber in Axialrichtung bezüglich des Trägers 68 fixiert ist. Die Welle 72 ist somit über den Schlittenmechanismus 70 in Axialrichtung bewegbar. Die Bewegungsrichtung des Schlittenmechanismus 70 ist genau parallel zur Drehachse der Welle 72 so daß die Welle 72 bei einer Bewegung des Trägers 68 entlang ihrer Drehachse A bewegt wird.

An dem freien, unteren Ende der Welle 72 ist der Mitnehmer 20 derart angebracht, daß er drehfest mit der Welle 72 verbunden ist und in Axialrichtung mit ihr bewegbar ist. Der Mitnehmer ist ferner derart angebracht, daß dessen Mittelachse mit der Drehachse der Welle 72 zusammenfällt.

An dem freien, unteren Ende der Welle 72 ist ferner drehfest ein Aufsatz 76 angebracht, der eine nach unten weisende ringförmige Anlagefläche 78 mit abgerundeten Außenkanten 80 aufweist. Die Anlagefläche 78 umgibt ringförmig den Mitnehmer 20 und ist gegenüber dessen unterstem Ende nach oben zurückgesetzt.

Der Aufsatz 76 weist an seinem von der Anlagefläche 78 entgegengesetzten Ende einen Flansch 80 auf, der die Welle 72 ringförmig umgibt und zur Bildung eines Ringraums 82 von der Welle 72 beabstandet ist, wie am Besten in Fig. 3 zu erkennen ist.

Die Zentrier- und Halteinrichtung 66 am Oberteil 44 weist einen glockenförmigen Träger 84 auf, an dessen nach unten weisender Stirnseite ein Vakuumring 86 angeordnet ist, der im Wesentlichen denselben Aufbau besitzt wie der Vakuumring 48. Der Vakuumring steht über geeignete, nicht näher dargestellte Mittel, mit einer Unterdruckquelle, wie beispielsweise einer Pumpe, in Verbindung.

Der Träger 84 umgibt wenigstens teilweise die Welle 72 und ist in geeigneter Weise, wie beispielsweise mittels einer Keilnutverbindung drehfest mit der Welle 72 verbunden. Über geeignete Lager 98 ist der Träger 84 über axial entlang der Welle 72 bewegbar, wie nachfolgend noch näher erläutert wird. Ein Flanschteil 90 des Trägers 84 erstreckt sich in den zwischen dem Flansch 80 des Aufsatzes 76 und der Welle 72 gebildeten Ringraum 82. Hierdurch wird sichergestellt, daß durch Reibung zwischen der Welle 72 und den Lagern 88 entstehende Partikel in dem Ringraum 82 aufgefangen werden und nicht auf die zusammenzufügenden Substrate gelangt.

Der Träger 84 ist mit einem Linearbewegungsmechanismus 94 gekoppelt, der, wie nachfolgend noch näher beschrieben wird, eine Bewegung des Trägers 84 entlang der Welle 72 bewirkt. Der Linearbewegungsmechanismus 94 ist seinerseits an dem Träger 68 befestigt, so daß er auch einer Linearbewegung des Trägers 68 folgt. Der Schlittenmechanismus 70 weist einen viel größeren Hubbereich auf als der Linearbewegungsmechanismus 94, so daß eine grobes Positionierung der Bauteile des Oberteils 44 in Axialrichtung über den Schlittenmechanismus 70 erfolgt, und eine feine Bewegung ausschließlich des Trägers 84 über den Linearbewegungsmechanismus 94 erfolgt.

Die Koppelung zwischen dem Träger 84 und dem Linearbewegungsmechanismus 94 erfolgt über eine zylindrische Hülse 96, die in geeigneter Weise mit dem Träger 84 verbunden ist, die über ein zylindrisches Gleitlager 98 auf der Welle 72 verschiebbar ist. Die Hülse 96 ist von zwei Lagern 100 umgeben, um eine Drehbewegung der zylindrischen Hülse 96 mit dem Träger 84 bezüglich einer zylindrischen Aufnahmehülse 102 zu erlauben, die drehfest mit der Linearbewegungseinheit 94 verbunden ist. Eine durch den Linearbewegungsmechanismus 94 bewirkte Axialbewegung der Aufnahmehülse 102 wird über entsprechende, sich radial erstreckende Begrenzungen an der Aufnahmehülse 102 und/oder der Hülse 96 auf die Hülse 96 übertragen. Die Hülse 96 überträgt die Axialbewegung wiederum auf den Träger 84. Diese Axialbewegung ist durch die Welle 72 geführt, so daß der Träger 84, und insbesondere der Vakuumring 86, in genauer Ausrichtung zur Welle 72 bzw. zu dessen Drehachse A in Axialrichtung bewegt wird. Somit ist der Träger 84, und insbesondere der Vakuumring 86, auch zum Mitnehmer 20 und dem Aufsatz 76 in Axialrichtung verschiebbar. Die Funktion dieser axialen Verschiebung wird nachfolgend noch näher beschrieben.

Der Betriebsablauf der Vorrichtung 40 wird nun unter Bezugnahme auf die Fig. 3 und 4 näher erläutert.

Zunächst werden das Unterteil 42 und das Oberteil 44 über den Schlittenmechanismus 70 in Axialrichtung auseinanderbewegt, so daß die Zentrier- und Halteeinrichtungen 46 und 66 jeweils ein ein Innenloch aufweisendes Substrat, wie beispielsweise ein DVD-Halbseite aufnehmen können. Dabei erstreckt sich der Zentrierstift 1 in das Innenloch eines ersten Substrats, während sich der Mitnehmer 20 in das Innenloch des anderen Substrats erstreckt. Die Substrate werden durch die jeweiligen Vakuumringe 48 bzw. 86 an den Zentrier- und Halteeinrichtungen 46 bzw. 66 gehalten. Die Aufsätze 60 bzw. 76 befinden sich in einer zurückgezogenen Position, in der sie mit den an den Vakuumringen 48 bzw. 86 gehaltenen Substraten nicht in Kontakt stehen. In einer Position, in der die Aussenbereiche der Substrate aufgewölbt sind, kann über eine nicht näher dargestellte Aufbringvorrichtung ein Kleber auf mindestens eines der Substrate aufgebracht werden. Der Kleber wird vorzugsweise im Bereich des Mittellochs des Substrats in der Form einer kreisförmigen Wulst auf das Substrat aufgebracht. Alternativ kann der Kleber (schon vor dem Beladen der Vorrichtung) auf eines oder beide der Substrate aufgebracht worden sein.

Anschließend werden das Unterteil 42 und das Oberteil 44 derart aufeinander zu bewegt, daß die Zähne 13 am Zentrierstift 1 und die Zähne 33 am Mitnehmer 20 ineinandergreifen. Durch die Form der Zähne 13 erfolgt hierbei eine Drehausrichtung zwischen dem Zentrierstift 1 und dem Mitnehmer 20, sowie ein Zentrierung der beiden Elemente zueinander. Zu diesem Zeitpunkt werden die durch die Vakuumringe 48 bzw. 86 gehaltenen Substrate parallel und mit geringem Abstand zueinander gehalten. Nun wird die Drehwelle 57 über die Antriebsvorrichtung und ihre Längsachse gedreht. Dabei werden der Träger 55 mit dem Vakuumring 48, sowie der Zentrierstift 1 und der Aufsatz 60 mit der Welle mitgedreht. Durch den formflüssigen Eingriff zwischen dem Zentrierstift 1 und dem Mitnehmer 20 wird auch der Mitnehmer 20 und somit die Drehwelle 72, der Aufsatz 76 und der Träger 84 mitgedreht. Auf diese Weise werden die zu diesem Zeitpunkt beabstandet voneinander gehaltenen Substrate synchron zueinander gedreht.

Durch eine Relativbewegung zwischen dem Träger 55 und der Drehwelle 57 in Axialrichtung der selben wird die gestufte Oberseite 61 des Aufsatzes 60 in Kontakt mit dem am Vakuumring 48 gehaltenen Substrat gebracht. Durch eine weiterführende Bewegung des Aufsatzes 60 derart, daß dessen Oberseite 61 über die durch den Vakuumring 48 gebildete Ebene 63 hinausbewegt wird, wird das weiterhin am Vakuumring 48 gehaltene Substrat im Mittelbereich nach oben durchgebogen. Dadurch kommt das Substrat mit dem darüber liegenden Substrat zunächst im Mittelbereich in Kontakt. Durch eine entsprechende Relativbewegung zwischen dem Vakuumring 48 und dem Aufsatz 60 wird nun das am Vakuumring 48 gehaltene Substrat fortschreitend von innen nach außen mit den darüber gehaltenen Substrat zusammengebracht und mit diesem verklebt.

Alternativ oder auch zusätzlich erfolgt eine entsprechende Verbiegung des am Vakuumring 86 gehaltenen Substrats durch eine Bewegung des Trägers 84 entlang der Welle 72. Durch eine Bewegung des Trägers 84 nach oben entlang der Welle 72 wird das an dem Vakuumring 86 gehaltene Substrat zunächst gegen die Anlagefläche 78 des Aufsatzes 76 bewegt und dann um die abgerundeten Kanten 80 leicht umgebogen. Hierdurch kann ein Kontakt der beiden Substrate im Mittelbereich derselben bewirkt werden. Durch eine umgekehrte Bewegung des Trägers 84 entlang der Welle 72 können die Substrate nunmehr fortschreitend von Innen nach Außen zusammengebracht und verklebt werden.

Eine Verbiegung des unteren Substrats kann parallel zur Verbiegung des oberen Substrats erfolgen, sie kann aber auch komplett weggelassen werden.

Hierdurch wird ein Verkleben der beiden Substrate ohne lufteinschlüsse dazwischen sichergestellt.

Während des obigen Vorgangs werden die beiden Zentrier- und Halteeinrichtungen 46, 66 und somit die daran gehaltenen Substrate synchron und zentriert zueinander gedreht, was ein gutes und homogenes Zusammenfügen ermöglicht.

Obwohl die Erfindung anhand eines bevorzugten Ausführungsbeispiels der Erfindung beschrieben wurde, ist die Erfindung nicht auf das konkret dargestellte Ausführungsbeispiel beschränkt. Beispielsweise können die beiden Substrathalte- und Zentriereinrichtungen statt horizontal auch vertikal ausgerichtet sein, so daß ein Zusammenfügen der Substrate in vertikaler Ausrichtung erfolgt. Statt einen Drehantrieb für die Welle 57 vorzusehen, könnte auch ein Drehantrieb für die Welle 72 vorgesehen werden, wobei in diesem Fall die Welle 57 frei drehbar gelagert wäre.

## Patentansprüche

1. Vorrichtung (40) zum Verkleben von zwei ein Innenloch aufweisenden Substraten zu einer Substratscheibe, mit einer ersten Haltevorrichtung (48) zum Halten des ersten Substrats, einem drehfest mit der ersten Haltevorrichtung verbundenen Zentrierstift (1), der in das Innenloch wenigstens des ersten Substrats einführbar ist, und einem Antrieb zum Drehen des Zentrierstifts (1) und der ersten Haltevorrichtung (48), einem mit dem Zentrierstift (1) in Eingriff bringbaren Mitnehmer (20) und einer zweiten Haltevorrichtung (86) zum Halten des zweiten Substrats, die drehfest mit dem Mitnehmer (20) verbunden ist, **dadurch gekennzeichnet, dass** die erste Halteeinrichtung (48) relativ zum Zentrierstift (1) und/oder die zweite Haltevorrichtung (86) relativ zum Mitnehmer (20) entlang seiner Drehachse bewegbar ist.

2. Vorrichtung (40) nach Anspruch 1, **dadurch gekennzeichnet, daß** der Zentrierstift (1) und der Mitnehmer (20) komplementäre Strukturen für einen formschlüssigen Eingriff aufweisen.

3. Vorrichtung (40) nach Anspruch 2, **dadurch gekennzeichnet, daß** die Strukturen Zähne (13; 33) am Zentrierstift (1) und am Mitnehmer (20) umfassen.

4. Vorrichtung (40) nach Anspruch 3, **dadurch gekennzeichnet, daß** die Zähne (13; 33) jeweils eine im wesentlichen parallel zur Axialrichtung des Zentrierstifts (1) bzw. es Mitnehmers (20) verlaufende Zahnflanke (15; 35) und eine hierzu geneigte Zahnflanke (17; 37) aufweisen.

5. Vorrichtung (40) nach Anspruch 4, **dadurch gekennzeichnet, daß** die parallel zur Axialrichtung verlaufende Zahnflanke (15) am Zentrierstift (1) in Drehrichtung weist.

6. Vorrichtung (40) nach einem der Ansprüche 3 bis 5, **dadurch gekennzeichnet, daß** die Zähne (13, 33) beim In-Eingriff-Kommen eine Drehausrichtung zwischen Zentrierstift (1) und Mitnehmer (20) bewirken.

7. Vorrichtung (40) nach einem der vorhergehenden Ansprüche, **dadurch gekennzeichnet, daß** der Zentrierstift (1) in der Vorrichtung (40) ortsfest ist.

8. Vorrichtung (40) nach einem der vorhergehenden Ansprüche, **dadurch gekennzeichnet, daß** der Mitnehmer (20) axial auf den Zentrierstift (1) zu und von ihm weg bewegbar ist.

9. Vorrichtung (40) nach einem der vorhergehenden Ansprüche, **dadurch gekennzeichnet, daß** der Mitnehmer (20) als Zentrierstift für das Innenloch des zweiten Substrats vorgesehen ist.

10. Vorrichtung (40) nach einem der vorhergehenden Ansprüche, **dadurch gekennzeichnet, daß** der Zentrierstift (1) und der Mitnehmer (20) denselben Umfang aufweisen.

11. Vorrichtung (40) nach einem der vorhergehenden Ansprüche, **dadurch gekennzeichnet, daß** wenigstens eine der Haltevorrichtungen (48; 86) wenigstens einen Vakuumsauger aufweist.

12. Vorrichtung nach Anspruch 11, **dadurch gekennzeichnet, daß** der Vakuumsauger einen Ring (48; 86) mit einer Vielzahl von Saugöffnungen (53) aufweist.

13. Vorrichtung nach einem der vorhergehenden Ansprüche, **dadurch gekennzeichnet, daß** eine Drehachse des Zentrierstifts (1) mit der Drehachse des Mitnehmers (20) zusammenfällt.

14. Vorrichtung nach Anspruch 13, **dadurch gekennzeichnet, daß** die zweite Haltevorrichtung (86) entlang der Drehachse des Mitnehmers (20) bewegbar ist.

15. Vorrichtung nach Anspruch 1 oder 14, **dadurch gekennzeichnet, daß** die Bewegung der zweiten Haltevorrichtung (86) durch eine mit dem Mitnehmer (20) verbundene und hierzu zentrierte Welle geführt ist.

16. Verfahren zum Verkleben von zwei ein Innenloch aufweisenden Substraten zu einer Substratscheibe, mit folgenden Verfahrensschritten:
- Aufnehmen eines ersten Substrats an einer ersten drehbaren Haltevorrichtung (48), wobei das erste Substrat durch einen drehfest mit der ersten Haltevorrichtung verbundenen Zentrierstift (1) zentriert wird; .
- Aufnehmen eines zweiten Substrats an einer zweiten drehbaren Haltevorrichtung (48), die drehfest mit dem Mitnehmer (20) verbunden ist;
- In-Eingriff-Bringen des Zentrierstift (1) mit dem Mitnehmer (20), wobei die Substrate parallel und mit Abstand zueinander gehalten werden;
- Drehen des Zentrierstifts (1) oder des Mitnehmers (20) über einen entsprechenden Antrieb, wobei die Drehung auf das nicht angetriebene Element, d.h. den Mitnehmer oder den Zentrierstift übertragen wird; und
- Zusammenfügen der beiden Substrate während der Drehung durch Relativbewegung zwischen den Halteeinrichtungen.

17. Verfahren nach Anspruch 16, **dadurch gekennzeichnet, dass** während der Drehung der Substrate ein dazwischen befindliches Klebematerial gleichmäßig verteilt wird.

18. Verfahren nach Anspruch 16 oder 17, **dadurch gekennzeichnet, dass** beim Zusammenfügen der beiden Substrate die zweite Halteeinrichtung relativ zu und entlang der Drehachse des Mitnehmers bewegt wird.

19. Verfahren nach Anspruch 18, **dadurch gekennzeichnet, dass** die Bewegung der zweiten Halteeinrichtung durch eine mit dem Mitnehmer verbundene und hierzu zentrierte Welle geführt wird.

20. Verfahren nach einem der Ansprüche 16 bis 19, **dadurch gekennzeichnet, dass** beim Zusammenfügen der Substrate die erste Halteeinrichtung relativ zum Zentrierstift bewegt wird.

21. Verfahren nach einem der Ansprüche 16 bis 20, **dadurch gekennzeichnet, dass** beim Zusammenfügen wenigstens eines der Substrate gebogen wird.

## Claims

1. Device (40) for gluing two substrates, which have an inner hole, to form a substrate disc, comprising a first holding device (48) for holding the first substrate, a centring pin (1) which is connected with the first holding device to be secure against rotation relative thereto and which is introducible into the inner hole of at least the first substrate, and a drive for rotating the centring pin (1) and the first holding device (48), an entrainer (20) which can be brought into engagement with the centring pin (1) and a second holding device (86) for holding the second substrate, the second holding device being connected with the entrainer (20) to be secure against rotation relative thereto, **characterised in that** the first holding device (48) is movable relative to the centring pin (1) and/or the second holding device (86) relative to the entrainer (20) along its axis of rotation.

2. Device (40) according to claim 1, **characterised in that** the centring pin (1) and the entrainer (20) have complementary structures for a mechanically positive engagement.

3. Device (40) according to claim 2, **characterised in that** the structures comprise teeth (13; 33) at the centring pin (1) and at the entrainer (20).

4. Device (40) according to claim 3, **characterised in that** the teeth (13; 33) each have a tooth flank (15; 35), which extends substantially parallel to the axial direction of the centring pin (1) or the entrainer (20), and a tooth flank (17; 37) inclined relative thereto.

5. Device (40) according to claim 4, **characterised in that** the tooth flank (15), which extends parallel to the axial direction, at the centring pin (1) faces in rotational direction.

6. Device (40) according to one of claims 3 to 5, **characterised in that** the teeth (13, 33) when coming into engagement produce a rotational alignment between centring pin (1) and entrainer (20).

7. Device (40) according to one of the preceding claims, **characterised in that** the centring pin (1) is arranged in stationary position in the device (40).

8. Device (40) according to one of the preceding claims, **characterised in that** the entrainer (20) is axially movable on the centring pin (1) towards and away from it.

9. Device (40) according to one of the preceding claims, **characterised in that** the entrainer (20) is provided as centring pin for the inner hole of the second substrate.

10. Device (40) according to one of the preceding claims, **characterised in that** the centring pin (1) and the entrainer (20) have the same circumference.

11. Device (40) according to one of the preceding claims, **characterised in that** at least one of the holding devices (48; 86) has at least one vacuum suction means.

12. Device according to claim 11, **characterised in that** the vacuum suction means comprises a ring (48; 86) with a plurality of suction openings (53).

13. Device according to one of the preceding claims, **characterised in that** an axis of rotation of the centring pin (1) coincides with the axis of rotation of the entrainer (20).

14. Device according to claim 13, **characterised in that** the second holding device (86) is movable along the axis of rotation of the entrainer (20).

15. Device according to claim 1 or 14, **characterised in that** the movement of the second holding device (86) is guided by a shaft connected with the entrainer (20) and centred with respect thereto.

16. Method of gluing two substrates, which have an inner hole, to form a substrate disc, comprising the following method steps:
- receiving a first substrate at a first rotatable holding device (48), wherein the first substrate is centred by a centring pin (1) connected with the first holding device to be secure against rotation relative thereto;
- receiving a second substrate at a second rotatable holding device (48) which is connected with the entrainer (20) to be secure against rotation relative thereto;
- bringing the centring pin (1) into engagement with the entrainer (20), wherein the substrates are held parallel and at a spacing from one another;
- rotating the centring pin (1) or the entrainer (20) by way of a corresponding drive, wherein the rotation is transmitted to the non-driven element, i.e. the entrainer or the centring pin; and
- joining together the two substrates during the rotation by relative movement between the holding devices.

17. Method according to claim 16, **characterised in that** during the rotation of the substrates an adhesive material disposed therebetween is uniformly distributed.

18. Method according to claim 16 or 17, **characterised in that** on joining together the two substrates the second holding device is moved relative to and along the axis of rotation of the entrainer.

19. Method according to claim 18, **characterised in that** the movement of the second holding device is guided by a shaft connected with the entrainer and centred relative thereto.

20. Method according to one of claims 16 to 19, **characterised in that** on joining together the substrates the first holding device is moved relative to the centring pin.

21. Method according to one of claims 16 to 20, **characterised in that** at least one of the substrates is bent during the joining together.

## Revendications

1. Dispositif (40) pour le collage de deux substrats présentant un trou interne en un disque de substrat, avec un premier dispositif de retenue (48) pour retenir le premier substrat, un axe de centrage (1) relié d'une manière non tournante au premier dispositif de retenue, qui est insérable dans le trou interne d'au moins du premier substrat, et un entraînement pour faire tourner l'axe de centrage (1) et le premier dispositif de retenue (48), un organe d'entraînement (20) pouvant être mis en prise avec l'axe de centrage (1), et un deuxième dispositif de retenue (86) pour retenir le deuxième substrat, qui est relié d'une manière non tournante à l'organe d'entraînement (20), **caractérisé en ce que** le premier dispositif de retenue (48) est déplaçable relativement à l'axe de centrage (1) et/ou le deuxième dispositif de retenue (86) relativement à l'organe d'entraînement (20) le long de son axe de rotation.

2. Dispositif (40) selon la revendication 1, **caractérisé en ce que** l'axe de centrage (1) et l'organe d'entraînement (20) présentent des structures complémentaires en vue d'une mise en prise par concordance des formes.

3. Dispositif (40) selon la revendication 2, **caractérisé en ce que** les structures comprennent des dents (13 ; 33) à l'axe de centrage (1) et à l'organe d'entraînement (20).

4. Dispositif (40) selon la revendication 3, **caractérisé en ce que** les dents (13 ; 33) présentent un flanc de dent (15 ; 35) s'étendant sensiblement parallèlement à la direction axiale de l'axe de centrage (1) respectivement de l'organe d'entraînement (20) et un flanc de dent (17 ; 37) incliné par rapport à celui-ci.

5. Dispositif (40) selon la revendication 4, **caractérisé en ce que** le flanc de dent (15) à l'axe de centrage (1) s'étendant parallèlement à la direction axiale est orienté dans la direction de rotation.

6. Dispositif (40) selon l'une des revendications 3 à 5, **caractérisé en ce que** les dents (13 ; 33), lors de la mise en prise, provoquent une orientation de rotation entre l'axe de centrage (1) et l'organe d'entraînement (20).

7. Dispositif (40) selon l'une des revendications précédentes, **caractérisé en ce que** l'axe de centrage (1) dans le dispositif (40) est fixe.

8. Dispositif (40) selon l'une des revendications précédentes, **caractérisé en ce que** l'organe d'entraînement (20) est déplaçable axialement vers l'axe de centrage (1) et au loin de celui-ci.

9. Dispositif (40) selon l'une des revendications précédentes, **caractérisé en ce que** l'organe d'entraînement (20) est prévu comme axe de centrage pour le trou interne du deuxième substrat.

10. Dispositif (40) selon l'une des revendications précédentes, **caractérisé en ce que** l'axe de centrage (1) et l'organe d'entraînement (20) présentent le même pourtour.

11. Dispositif (40) selon l'une des revendications précédentes, **caractérisé en ce qu'**au moins l'un des dispositifs de retenue (48 ; 86) présente au moins un aspirateur à vide.

12. Dispositif selon la revendication 11, **caractérisé en ce que** l'aspirateur à vide présente une bague (48 ; 86) avec une multitude d'ouvertures d'aspiration (53).

13. Dispositif selon l'une des revendications précédentes, **caractérisé en ce qu'**un axe de rotation de l'axe de centrage (1) coïncide avec l'axe de rotation de l'organe d'entraînement (20).

14. Dispositif selon la revendication 13, **caractérisé en ce que** le deuxième dispositif de retenue (86) est déplaçable le long de l'axe de rotation de l'organe d'entraînement (20).

15. Dispositif selon la revendication 1 ou 14, **caractérisé en ce que** le déplacement du deuxième dispositif de retenue (86) est guidé par un arbre relié à l'organe d'entraînement (20) et centré relativement à celui-ci.

16. Procédé de collage de deux substrats présentant un trou interne en un disque de substrat, comprenant les étapes consistant à :
- recevoir un premier substrat à un premier dispositif de retenue tournant (48), où le premier substrat est centré par un axe de centrage (1) relié d'une manière non tournante au premier dispositif de retenue ;
- recevoir un deuxième substrat à un deuxième dispositif de retenue tournant (48), qui est relié d'une manière non tournante à l'organe d'entraînement (20) ;
- mettre en prise l'axe de centrage (1) et l'organe d'entraînement (20), où les substrats sont maintenus parallèlement et à une distance l'un de l'autre ;
- faire tourner l'axe de centrage (1) ou l'organe d'entraînement (20) par un entraînement correspondant, où la rotation est transmise à l'élément non entraîné, c'est-à-dire à l'organe d'entraînement ou à l'axe de centrage et
- assembler les deux substrats pendant la rotation par un mouvement relatif entre les installations de retenue.

17. Procédé selon la revendication 16, **caractérisé en ce que** pendant la rotation des substrats, un matériau collant se trouvant entre eux est réparti uniformément.

18. Procédé selon la revendication 16 ou 17, **caractérisé en ce que** lors de l'assemblage des deux substrats, la deuxième installation de retenue est déplacée relativement à et le long de l'axe de rotation de l'organe d'entraînement.

19. Procédé selon la revendication 18, **caractérisé en ce que** le mouvement de la deuxième installation de retenue est guidé par un arbre relié à l'organe d'entraînement et centré relativement à celui-ci.

20. Procédé selon l'une des revendications 16 à 19, **caractérisé en ce que** lors de l'assemblage des substrats, la première installation de retenue est déplacée relativement à l'axe de centrage.

21. Procédé selon l'une des revendications 16 à 20, **caractérisé en ce que** lors de l'assemblage au moins l'un des substrats est courbé.
